# FASCICULE DE BREVET EUROPEEN

(11) **EP 1 159 623 B1**
(45) Date de publication et mention de la délivrance du brevet: **31.10.2012**
(21) Numéro de dépôt: 00907726.4
(22) Date de dépôt: 25.02.2000
(51) Int. Cl.: G01P 3/44, G01P 3/487

(54) **ENSEMBLE PREASSEMBLE FORMANT JOINT D'ETANCHEITE A CODEUR INCORPORE ET ROULEMENT OU PALIER COMPORTANT UN TEL ENSEMBLE**
VORGEFERTIGTE EINHEIT AUS DICHTUNG MIT EINGEBETTETEM GEBERELEMENT UND (WAELZ-)LAGER MIT EINER SOLCHEN EINHEIT
PRE-MOUNTED ASSEMBLY FORMING A SEALING JOINT WITH INCORPORATED ENCODER AND BALL BEARING OR BEARING COMPRISING SAME

(30) Priorité: 10.03.1999 FR 9902964
(43) Date de publication de la demande: 05.12.2001
(73) Titulaire: S.N.R. ROULEMENTS, 74010 Annecy Cédex (FR)
(72) Inventeur: NANTUA, René, F-74330 Sillingy (FR); BOCHET, Alain, F-74600 Seynod (FR); SAND, Jean-Pierre, F-74000 ANNECY (FR)
(74) Mandataire: Novagraaf Technologies
(86) Numéro de dépôt international: PCT/FR2000/000473
(87) Numéro de publication internationale: WO 2000/054059

(56) Documents cités:
- EP-A- 0 464 404
- WO-A-93/14372
- DE-A- 19 644 744
- US-A- 4 968 933
- US-A- 5 089 817
- PATENT ABSTRACTS OF JAPAN vol. 1998, no. 02, 30 janvier 1998 (1998-01-30) & JP 09 274051 A (NIPPON SEIKO KK), 21 octobre 1997 (1997-10-21)

## Description

L'invention se rapporte au domaine technique des roulements pourvus d'un moyen tournant générateur d'impulsions, appelé codeur ; un dispositif de détection, appelé capteur, permettant l'obtention d'une information, telle que, par exemple, la vitesse de rotation d'un palier comprenant un tel roulement à codeur incorporé.

De tels paliers peuvent, par exemple, être employés pour les roues de véhicule automobile pourvus de système anti-blocage des roues.

L'invention se rapporte plus particulièrement aux roulements à codeur magnétique incorporé, le capteur fonctionnellement associé étant de type magnéto-résistance ou sonde à effet Hall, par exemple.

On connaît déjà, dans l'art antérieur, de nombreuses conceptions de tels roulements à codeur magnétique incorporé.

On peut se référer, par exemple, aux documents suivants :
- demandes de brevet en France N° 2 667 947, 2 669 432, 2 669 728, 2 671 633, 2 678 691, 2 678 692, 2 690 989, 2 693 272, 2 694 082, 2 702 567, 2 710 985, 2 718 499
- demandes de brevet européen N° 375 019, 420 040, 420 041, 438 624, 487 405, 488 853, 498 298, 518 157, 521 789, 522 933, 531 924, 557 931, 557 932, 647 851, 693 689, 701 132, 701 133, 714 029, 745 857, 751 311, 753 679, 767 385.

On peut se référer, également à titre d'exemple, aux documents suivants, issus de la demanderesse :
- demandes de brevet en France N° 2 639 689, 2 640 706, 2 645 924, 2 730 283, 2 732 458, 2 717 266, 2 701 298 ;
- demandes de brevet européen N° 371 836, 376 771, 484 195, 394 083, 607 719, 616 219, 619 438, 631 140, 652 438, 671 628, 725 281, 735 348.

La très grande variété des conceptions proposées dans l'art antérieur pour de tels roulements à codeur magnétique incorporé illustre le fait que plusieurs problèmes techniques posés par ces roulements n'ont pas trouvé à ce jour de solution unique satisfaisante.

Tel est en particulier le cas pour ce qui est du contrôle de la distance géométrique séparant le codeur et le capteur.

L'induction magnétique délivrée par le codeur variant fortement en fonction de l'entrefer, l'information délivrée par le capteur -qui est une information de sécurité dans le cas des applications telle que l'anti-blocage de roues- peut être faussée si la distance codeur-capteur n'est pas correctement contrôlée.

A cet égard, on peut distinguer deux grands types d'associations fonctionnelles du capteur, par rapport au roulement, dans les conceptions de l'art antérieur.

Le premier type d'association fonctionnelle du capteur par rapport au roulement, par la suite désigné par l'expression "premier type d'association" est largement majoritaire.

Dans ce premier type d'association, sont prévus des moyens de solidarisation éventuellement réversibles du capteur sur le roulement.

Les documents EP-A-464 403, EP-A-464 404, EP-A-464 405 décrivent des roulements à capteur passif intégré fonctionnellement et portés par un support intégré à la bague fixe du roulement.

Le document EP-A-596 873, issu de la demanderesse, décrit un roulement ou palier à codeur incorporé, dans lequel le capteur est fixé radialement au roulement.

Le document EP-A-495 323, issu de la demanderesse, décrit un roulement à codeur incorporé dans lequel un collier annulaire de fixation permet l'association du capteur et du roulement, le collier ayant un diamètre sensiblement égal au diamètre extérieur d'un élément fixe de la garniture d'étanchéité du roulement, ce capteur étant porté par le collier.

Le document EP-A-371 836, issu de la demanderesse, décrit un roulement à codeur et capteur agencés sur des supports montés sur les bagues du roulement, l'un des supports se prolongeant par une monture d'appui des lèvres d'étanchéité de la garniture.

Le document EP-A-394 083, issu de la demanderesse, décrit un palier préassemblé comportant un anneau magnétique codeur accolé à un capteur, le codeur ou le capteur étant monté sur une bague de montage déformable élastiquement.

Le document EP-A-821 240 décrit un palier à roulement comprenant un moyen codeur et un moyen capteur, le moyen capteur étant supporté par un bloc porte-capteur solidaire de la bague fixe du roulement, le palier comprenant un moyen de pincement du bloc porte-capteur contre une surface de la bague fixe.

On peut se référer, également, pour ce premier type d'association, aux documents suivants : EP-A-822 413, EP-A-619 438, FR-A-2 717 266, FR-A-2 732 458, FR-A-2 730 283, EP-A-725 281, FR-A-2 740 186.

Le deuxième type d'association du capteur par rapport au roulement, par la suite désigné par l'expression "deuxième type d'association", est celui dans lequel le capteur n'est pas directement supporté par le roulement et est dissocié du roulement à codeur magnétique incorporé.

On peut se référer, par exemple, au document EP-A-607 719 issu de la demanderesse.

Tant le premier type d'association que le deuxième type d'association du capteur par rapport au roulement présentent de nombreux inconvénients.

Dans le premier type d'association, l'ajustement du capteur sur le roulement peut poser problème du fait :
- des vibrations en service ;
- des manipulations lors des phases d'assemblage du roulement sur son support ;
- des différences de dilatation thermique entre l'acier du roulement, le matériau du joint d'étanchéité et le capteur.

Pour résoudre ces problèmes notamment, des moyens de positionnement déformables ont été envisagés.

On peut se référer, par exemple aux documents suivants : FR-A-2 752 447, WO A 97/15 833.

Les moyens de positionnement déformables présentés ci-dessus, tout comme les moyens d'association du capteur sur le roulement dans le premier type d'association considéré, présentent l'inconvénient important d'impliquer une modification de la géométrie du roulement, au moins au voisinage du codeur, pour permettre la mise en place du capteur.

Une telle conception n'est donc pas du tout modulable, le roulement, les moyens d'association du capteur et les moyens de positionnement déformables éventuels devant être conçus en même temps.

Le deuxième type d'association du capteur par rapport au roulement, tel que décrit dans le document EP-A-607 719 issu de la demanderesse, présente l'inconvénient de laisser le codeur à nu et donc non protégé des agressions du milieu ambiant.

Dans certaines applications, cette absence de protection peut être préjudiciable au bon fonctionnement du codeur.

L'influence néfaste de certains environnements sur le fonctionnement de codeurs magnétiques est connue de l'homme du métier.

Le document FR-A-2 642 483, issu de la demanderesse, décrit un joint d'étanchéité tournant à codeur magnétique intégré dans lequel les lèvres d'étanchéité isolent l'entrefer et séparent l'ensemble du capteur avec son codeur des agents agressifs venant de l'extérieur ou de l'intérieur du roulement.

Le document EP-A-726 468 décrit un roulement à codeur incorporé dans lequel le codeur est fixé sur une face interne d'un élément de protection et de support rigide, réalisé en matériau métallique amagnétique, une face externe correspondante dudit élément de protection défilant en rotation devant le dit capteur.

Le codeur magnétique porté par l'élément de protection tournant décrit dans le document EP-A-726 468 peut attirer les particules magnétiques telles que copeaux d'usinage, ce qui peut entraîner une perturbation du signal reçu par le capteur.

Le document FR-A-2 755 193 décrit un palier à roulement dans lequel la pièce génératrice d'impulsions du roulement à codeur incorporé est placée à l'intérieur du dispositif d'étanchéité, une pièce formant couvercle, non ferromagnétique, étant placée fixe devant la pièce génératrice d'impulsions.

Dans la conception décrite par ce document FR-A-2 755 193, il est indiqué que la paroi de protection et le capteur sont de manière avantageuse en contact. Un tel contact est en fait désavantageux, les variations dimensionnelles dues aux dilatations thermiques ou liées aux vibrations en service pouvant induire une altération de ce contact capteur-paroi de protection. Les déplacements latéraux parasites, en fonctionnement, d'un roulement pourvu d'un tel capteur peuvent induire une mise en contrainte de ce capteur.

Dans la conception décrite par le document FR-A-2 755 193, le contact entre la paroi de protection et le capteur est d'autant plus nécessaire que le diamètre du roulement est faible, le champ magnétique délivré par le codeur incorporé dans un roulement de faible diamètre étant trop faible pour que le capteur soit placé à grande distance du codeur. On connait par ailleurs par le document EP 1 030 181, cité en titre de l'article 54(3) CBE, un ensemble préassemblé formant joint d'étanchéité à codeur multipolaire intégré correspondant au préambule de la revendication 1.

L'invention vise à fournir un roulement pourvu d'un moyen tournant générateur d'impulsions ne présentant pas les inconvénients des roulements de ce type connus de l'art antérieur.

En particulier, un des objets de l'invention est de fournir un roulement pourvu d'un moyen tournant générateur d'impulsions permettant, en combinaison, la mise en place d'un capteur de type magnéto-résistance ou sonde à effet Hall à une valeur d'entrefer industriellement réalisable y compris pour des roulements de faibles diamètres, ce capteur étant dissocié du roulement et ne modifiant pas sa géométrie, le roulement étant pourvu de moyens de protection du codeur, les risques de dépôt de particules ferromagnétiques telles que des copeaux d'usinage sur la protection du codeur étant très faibles et ce dépôt éventuel ne perturbant pas le signal issu du capteur, le contact entre le capteur et la paroi de protection du codeur n'étant pas nécessaire au bon fonctionnement du capteur, y compris pour des roulements de faibles diamètres.

A cette fin, l'invention se rapporte, selon un premier aspect, à un ensemble préassemblé formant joint d'étanchéité à codeur magnétique multipolaire incorporé, destiné à être monté entre un support fixe et un support tournant faisant partie d'un roulement ou d'un palier, ledit ensemble comprenant :
- une armature fixe solidarisée au support fixe ;
- une armature mobile portant le codeur et solidarisée au support tournant ledit ensemble préassemblé étant apte à être dépourvu de moyen permettant l'association d'un capteur devant lequel est apte à se déplacer ledit codeur,
le codeur magnétique multipolaire comportant un nombre de paires de pôles réduit permettant, par l'augmentation du champ magnétique délivré, la mise à distance de la face latérale externe de l'armature fixe par rapport au capteur, le flux magnétique du codeur étant détecté par le capteur au travers de l'armature fixe.

Dans un mode de réalisation, un joint d'étanchéité recouvre partiellement ou totalement la face latérale externe d'une paroi support d'étanchéité de l'armature fixe, ce joint d'étanchéité comprenant :
- un talon d'étanchéité statique en contact contre la paroi latérale externe supérieure du support fixe ;
- au moins un moyen d'étanchéité dynamique en frottement contre le support tournant.

Dans un autre mode de réalisation, le joint d'étanchéité comprend au moins un moyen d'étanchéité dynamique tel qu'une lèvre en frottement contre le support tournant, et ne comporte pas de talon d'étanchéité statique.

L'ensemble préassemblé formant joint d'étanchéité à codeur magnétique multipolaire incorporé peut présenter les caractères suivants, seuls ou en combinaison.

L'armature mobile comprend une première paroi et une troisième paroi décalée axialement vers l'extérieur par rapport à la première paroi, la première paroi étant reliée par un congé de raccordement à une première portée cylindrique de l'armature mobile sur le support mobile, la troisième paroi portant le codeur magnétique.

L'armature mobile comporte une pièce basale pourvue d'un décrochement formant une quatrième paroi annulaire radiale, décalée vers l'extérieur, enrobée dans le matériau constituant le codeur magnétique.

La première paroi annulaire et une deuxième paroi annulaire de l'armature mobile forment une gorge annulaire à ouverture tournée vers l'extérieur.

La gorge annulaire présente, en section axiale, un profil en U ou pseudo U, en V ou pseudo V.

La face latérale externe de la gorge comprend des surfaces d'appui pour au moins une lèvre d'étanchéité dynamique.

Le disque codeur est élaboré en élastomère chargé de ferrite de strontium ou de ferrite de baryum.

Le joint d'étanchéité comporte, en partant du support fixe et en allant vers le support tournant :
- un talon d'étanchéité statique ;
- éventuellement, une bande annulaire ;
- une ou deux lèvres d'étanchéité dynamique.

Une lèvre d'étanchéité dynamique vient en appui contre la face latérale externe du support tournant.

L'invention se rapporte, selon un deuxième aspect, à un roulement ou palier étanche comportant une bague ou support fixe et une bague ou support tournant et, monté sur eux, un ensemble préassemblé formant joint d'étanchéité tel que présenté ci-dessus.

Dans un mode de réalisation, la surface latérale externe de l'armature fixe est décalée vers l'intérieur par rapport au plan P tangent aux faces latérales externes des bagues ou support de palier.

Dans un autre mode de réalisation, la surface latérale externe de l'armature fixe est sensiblement contenue dans le plan P tangent aux faces latérales externes des bagues ou supports de palier.

Le nombre de paires de pôles étant fixé à une valeur N la plus faible possible pour un entrefer donné, un circuit électronique couplé au capteur maintient une qualité de signal identique à celle qui aurait été obtenue avec un codeur comprenant un nombre de paires de pôles valant 2N, c'est-à-dire de résolution supérieure.

D'autres objets et avantages de l'invention apparaîtront au cours de la description suivante de modes de réalisation, description qui va être effectuée en se référant aux dessins annexés dans lesquels :
- la figure 1 est une vue en coupe axiale d'un joint d'étanchéité à codeur magnétique incorporé pour roulement ou palier selon un mode de réalisation de l'invention ;
- la figure 2 est une vue analogue à la figure 1 d'un deuxième mode de réalisation de l'invention ;
- la figure 3 est un diagramme représentant l'évolution de l'induction en fonction de l'entrefer, pour un codeur à 48 paires de pôles et un codeur à 24 paires de pôles, dans une configuration mécanique donnée ;
- la figure 4 est un diagramme analogue à la figure 3, en coordonnées semi logarithmiques ;
- la figure 5 est un diagramme d'un dispositif de traitement du signal issu du codeur et reçu par le capteur ;
- la figure 6 est un diagramme présentant les signaux issus du capteur et les signaux obtenus après traitement ;
- la figure 7 est un diagramme d'un dispositif de traitement du signal issu du codeur et reçu par le capteur, selon un autre mode de réalisation.

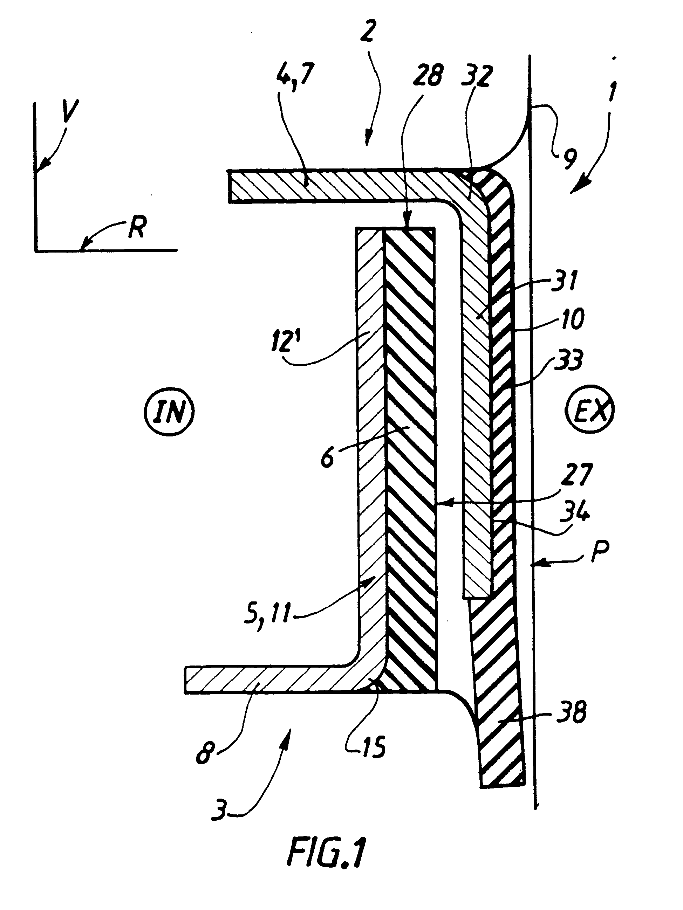

On se rapporte tout d'abord à la figure 1, qui est une vue de détail d'un ensemble préassemblé 1 formant joint d'étanchéité à codeur incorporé destiné à être monté entre un support fixe 2 et un support tournant 3 faisant partie d'un roulement ou d'un palier.

Ainsi, lorsque l'ensemble préassemblé 1 est monté dans un roulement, le support fixe 2 est la bague extérieure du roulement et le support tournant 3 est la bague intérieure du roulement, dans la configuration représentée.

Une armature fixe 4 est solidarisée au support fixe 2. De même, une armature mobile 5 comportant un disque codeur magnétique multipolaire 6 est solidarisée au support tournant 3.

L'homme du métier comprendra qu'en intervertissant les armatures fixe 4 et mobile 5, l'ensemble préassemblé 1 peut être intégré dans un roulement comprenant une bague extérieure mobile et une bague intérieure fixe.

Dans le mode de réalisation représenté en figure 1, l'armature mobile 5 est emmanchée frettée sur le support tournant 3, via une première portée cylindrique 8, de sorte que les deux pièces soient solidaires.

De même, l'armature fixe 4 est emmanchée frettée sur le support fixe 2, via une seconde portée cylindrique 7.

Dans d'autres modes de réalisation, non représentés, l'armature fixe et/ou l'armature mobile sont clipées et/ou collées sur le support fixe et le support mobile respectivement.

Dans d'autres modes de réalisation, non représentés, l'armature fixe est montée frettée sur l'extérieur du support fixe.

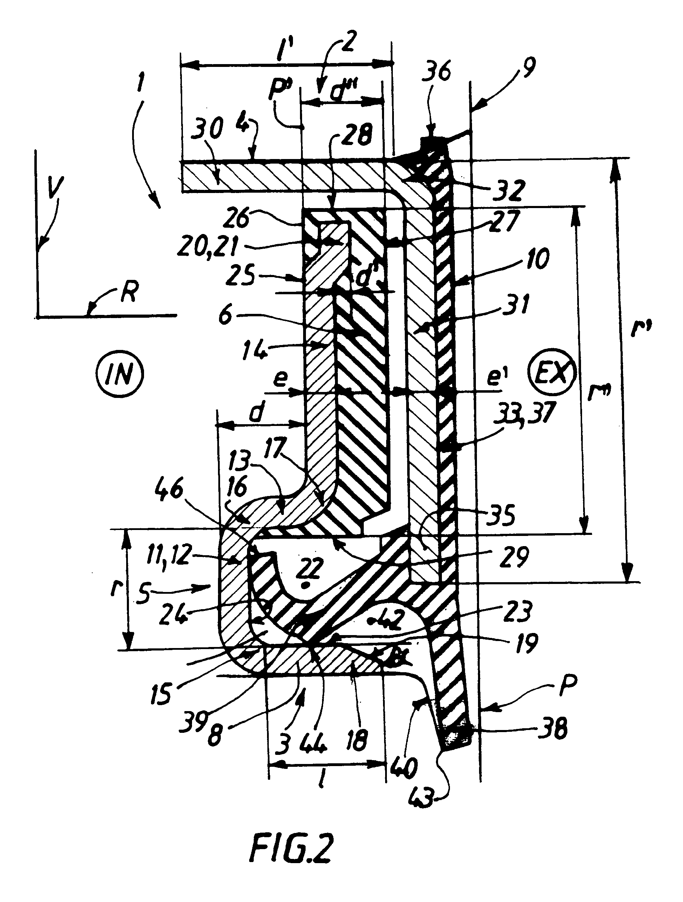

Dans la suite de cette description, les termes "interne", "intérieur", "externe", "extérieur" seront utilisés en rapport aux indices in et ex placés sur les figures 1 et 2.

Ainsi, lorsque l'ensemble préassemblé est destiné à être intégré dans un roulement, l'indice in placé à gauche de l'armature mobile 5 sur la figure 1 correspond à l'intérieur du roulement, contenant les corps roulant, l'indice ex placé à droite de l'armature fixe 4 sur la figure 1 correspondant à l'espace situé au-delà du plan P tangent à la face latérale extérieure 9 du support fixe 2.

La direction R est parallèle à l'axe de rotation du support tournant 3.

Dans la suite du texte, par soucis de simplification, cette direction R sera prise horizontale et les dimensions mesurées selon cette direction R seront dites "axiales".

La direction V, perpendiculaire à la direction R, définit avec la direction R le plan de coupe de la figure 1.

Cette direction V est donc prise verticale et les dimensions mesurées selon cette direction V seront dites "radiales".

Dans le mode de réalisation représenté en figure 1, la face latérale externe 10 de l'armature fixe 4 est décalée et en retrait vers l'intérieur par rapport au plan P défini ci-dessus.

Dans d'autres modes de réalisation, non représentés, la face latérale externe de l'armature fixe vient tangenter ledit plan P sans dépasser vers l'extérieur par rapport à ce plan.

Dans d'autres modes encore de réalisation, non représentés, la face latérale externe de l'armature fixe saille légèrement vers l'extérieur par rapport audit plan P.

L'armature mobile 5 comporte en partant du support tournant et en allant vers le support fixe 2, dans le mode de réalisation de la figure 1 :
- la première portée cylindrique 8, annulaire et axiale ;
- une paroi annulaire 12' radiale.

Un congé de raccordement 15 relie la première portée cylindrique 8 et la paroi annulaire 12'.

Un disque codeur magnétique multipolaire 6 est surmoulé sur la pièce basale 11 de l'armature mobile 5.

Ce disque peut être élaboré, par exemple, en élastomère chargé en ferrite tel que ferrite de baryum ou ferrite de strontium.

Dans le mode de réalisation représenté, le disque codeur 6 s'étend sur toute la dimension radiale de la paroi 12'.

Dans d'autres modes de réalisation, non représentés, le disque codeur 6 s'étend sur une partie seulement de la dimension radiale de la paroi 12'.

La face latérale externe 27 du disque codeur 6 est sensiblement verticale et distante de l'armature fixe 4 de protection du codeur, d'une valeur supérieure aux jeux fonctionnels.

La face annulaire 28 placée en regard de la portée cylindrique 7 de l'armature fixe 4 est, de même, écartée de cette portée pour éviter tout contact entre le codeur 6 et cette portée lors de la rotation du codeur 6.

L'armature fixe 4 comporte, en partant du support fixe 2 et en se déplaçant radialement vers le support tournant 3 :
- la seconde portée cylindrique 7 ;
- une paroi annulaire radiale support d'étanchéité 31.

Un congé de raccordement 32 relie la seconde portée cylindrique 7 axiale et la paroi support d'étanchéité 31.

Dans le mode de réalisation représenté, un joint d'étanchéité 33 surmoulé vient recouvrir la face latérale externe 34 de la paroi 31.

Dans d'autres modes de réalisation, non représentés, le joint d'étanchéité 33 ne recouvre pas la paroi 31 mais comprend uniquement un talon d'étanchéité statique et une lèvre d'étanchéité dynamique.

Dans d'autres modes encore de réalisation, non représentés, le joint d'étanchéité ne recouvre pas la paroi 31 mais comprend au moins un moyen d'étanchéité dynamique tel qu'une lèvre.

Dans le mode de réalisation représenté en figure 1, ce joint d'étanchéité 33 comporte une lèvre d'étanchéité dynamique 38 placée en appui, avec interférence, contre la face latérale externe du support tournant 3.

La pièce interne 30 de l'armature fixe est réalisée en matériau amagnétique, tout comme le joint d'étanchéité 33, de sorte que l'armature fixe ne perturbe en rien les lignes de champ issues du codeur 6.

L'on se rapporte maintenant à la figure 2.

Les éléments communs aux modes de réalisation des figures 1 et 2 sont référencés de la même manière.

On décrit maintenant plus complètement l'armature mobile 5, telle que représentée dans le mode de réalisation de la figure 2.

L'armature mobile 5 comporte une pièce basale annulaire 11 comprenant, en partant du support tournant 3 et en se déplaçant radialement vers le support fixe 2, dans le mode de réalisation représenté :
- la première portée cylindrique 8, annulaire et axiale ;
- une première paroi annulaire 12, radiale ;
- une deuxième paroi annulaire 13, axiale ;
- une troisième paroi annulaire 14, radiale, décalée d'une distance axiale d par rapport à la première paroi annulaire 12.

La première paroi annulaire 12 et la troisième paroi annulaire 14 sont sensiblement parallèles entre elles et parallèles au plan P, dans le mode de réalisation représenté.

La première portée cylindrique 8 et la seconde paroi annulaire 13 sont sensiblement concentriques et leurs traces dans le plan de la figure 2 sont sensiblement parallèles à la direction R.

Un premier congé de raccordement 15 relie la première portée cylindrique 8 et la première paroi annulaire 12.

Un deuxième congé de raccordement 16 relie la première paroi annulaire 12, radiale à la deuxième paroi annulaire 13, axiale.

Un troisième congé de raccordement 17 relie la deuxième paroi annulaire 13, axiale à la troisième paroi annulaire 14, radiale.

La première partie extrême 18 de la pièce basale 11 comporte un biseau 19 formant tronc de cône dont la trace, dans le plan de la figure 1, est inclinée d'un angle a compris entre 5 et 30° environ par rapport à l'horizontale.

La seconde partie extrême 20 de la pièce basale 11 comporte un décrochement 21 vers l'extérieur formant une quatrième paroi annulaire radiale, décalée vers l'extérieur d'une distance axiale d' par rapport à la troisième paroi annulaire 14.

Dans le mode de réalisation représenté, la distance d' est de l'ordre de la moitié de l'épaisseur e de l'armature mobile 5, la pièce basale annulaire 11 de l'armature mobile 5 présentant une épaisseur e sensiblement constante, à l'exception de la première partie extrême 18 biseautée.

La première portée cylindrique 8, la première paroi annulaire 12 et la deuxième paroi annulaire 13 forment, avec les congés de raccordement 15, 16, une gorge annulaire 22 à ouverture tournée vers l'extérieur.

Dans le mode de réalisation représenté en figure 2, cette gorge annulaire 22 présente, dans le plan de coupe axiale considéré, un profil en U de dimension axiale maximum sensiblement identique à sa dimension radiale maximum.

En d'autres termes, dans le mode de réalisation représenté, la longueur axiale l de la portée cylindrique 8 est sensiblement égale à la dimension radiale r de la première paroi annulaire 12.

La face latérale externe de la gorge annulaire 22 comprend une surface annulaire axiale 23 et une surface annulaire radiale 24 qui forment, ainsi qu'il apparaîtra plus complètement par la suite, surfaces d'appui pour des moyens d'étanchéité dynamique disposés sur l'armature fixe 4 de l'ensemble 1.

La pièce basale 11 de l'armature mobile 5 peut être réalisée en un matériau magnétique tel que par exemple un acier inoxydable X4Cr17.

Un disque codeur magnétique multipolaire 6 est surmoulé sur la pièce basale 11 de l'armature mobile 5.

Ce disque peut être élaboré, par exemple, en élastomère chargé en ferrite tel que ferrite de strontium, ferrite de baryum.

D'autres charges aptes à procurer des densités de flux magnétiques élevées par unité de volume peuvent a priori être envisagées, par exemple des alliages magnétiques néodyme-fer-bore ou samarium-cobalt. Toutefois les ferrites sont beaucoup moins onéreux et beaucoup plus faciles à magnétiser et sont donc préférés le plus souvent.

Le disque codeur 6 recouvre, dans l'exemple représenté, toute une surface latérale des deuxième 13, troisième 14 et quatrième 21 paroi latérales de la pièce basale 11 et enrobe le décrochement 21 formé sur la seconde partie extrême 20 de cette pièce basale 11.

La surface latérale interne annulaire 25 de la troisième paroi annulaire 14 est sensiblement placée dans la continuité de la surface latérale interne annulaire 26 du codeur 6, dans un plan transversal P' écarté d'une distance axiale d" de la face latérale externe 27 du codeur 6.

De sorte que le disque codeur 6 saille en direction de l'extérieur, sur la troisième paroi annulaire 14, d'une dimension axiale de l'ordre de deux fois l'épaisseur e de la pièce basale 11.

La face latérale externe 27 du disque codeur 6 est sensiblement verticale et distante de l'armature fixe 4 de protection du codeur d'une valeur supérieure aux jeux fonctionnels, de sorte à éviter tout contact entre le codeur tournant 6 et l'armature fixe 4.

La face annulaire 28 placée en regard de la portée cylindrique 7 de l'armature fixe 4 est, de même, écartée de cette portée 7 de sorte à éviter tout contact entre le codeur 6 et cette portée 7 lors de la rotation du codeur 6.

Dans le mode de réalisation représenté, le codeur 6 est limité radialement par la face annulaire 28 et une face annulaire 29 sensiblement concentrique à la face 28 et à la surface annulaire axiale 23 de la première portée 7.

La face annulaire 29 est distante de la surface annulaire axiale 23 de la valeur r définie auparavant.

La dimension radiale maximum r' du codeur 6, représentée par la distance radiale séparant les faces annulaires 28, 29 est de l'ordre de trois fois la valeur r définie auparavant, dans le mode de réalisation considéré.

On décrit maintenant plus complètement l'armature fixe 4.

L'armature fixe 4 comporte une pièce interne 30 comprenant, en partant du support fixe 2 et en se déplaçant radialement vers le support tournant :
- la seconde portée cylindrique 7 ;
- une paroi annulaire radiale support d'étanchéité 31.

Un congé de raccordement 32 relie la seconde portée cylindrique 7 axiale et la paroi support d'étanchéité 31.

La pièce interne 30 de l'armature fixe 4 présente une épaisseur e' sensiblement constante.

La pièce interne 30 présente, dans la coupe axiale représentée en figure 1 ou 2, un profil en L de dimension axiale maximum inférieure à sa dimension radiale maximum.

En d'autres termes, dans le mode de réalisation représenté, la longueur axiale l' de la seconde portée cylindrique 7 est inférieure à la dimension radiale r" de la paroi support d'étanchéité 31.

Cette dimension radiale r" de la paroi 31 est supérieure à la dimension radiale maximum r' du codeur 6.

La pièce interne 30 de l'armature fixe peut être pleine ou non et est réalisée en un matériau amagnétique tel que polymère ou certains aciers inoxydables, par exemple.

De sorte que la paroi support d'étanchéité 31 est parfaitement transparente magnétiquement et ne perturbe en rien les lignes de champ issues du codeur 6.

La paroi support d'étanchéité 31 est sensiblement parallèle à la face latérale externe 27 du codeur et sensiblement parallèle aux plans P et P' définis auparavant. Un joint d'étanchéité 33 surmoulé vient recouvrir la face latérale externe 34 de la paroi 31 et enrober la partie extrême 35 de cette paroi.

Dans le mode de réalisation représenté, ce joint d'étanchéité 33 comporte, en partant du support fixe 2 et en se déplaçant radialement vers le support tournant 3 :
- un talon d'étanchéité statique 36 ;
- une bande annulaire de recouvrement 37 de la paroi 31 ;
- deux lèvres d'étanchéité dynamique 38, 39.

La bande annulaire de recouvrement 37 peut être absente dans certains modes de réalisation.

Dans d'autres modes de réalisation, non représentés, ce joint d'étanchéité 33 comporte, en partant du support fixe 2 et en se déplaçant radialement vers le support tournant 3, deux lèvres d'étanchéité dynamiques, uniquement.

La lèvre d'étanchéité 38, sensiblement placée dans le prolongement de la paroi 31 et légèrement inclinée par rapport à celle-ci, vient en appui contre la face latérale externe 40 du support tournant 3.

La lèvre d'étanchéité 39 articulée autour d'une charnière 41 vient en appui avec interférence dans la gorge 22 contre les faces 23, 24 de la pièce basale de l'armature mobile 5.

Ainsi, la lèvre d'étanchéité dynamique 39 est précontrainte, dans un mode de mise en oeuvre.

La géométrie des lèvres d'étanchéité dynamique 38, 39 fait que l'espace séparant la face externe 27 du codeur 6 et l'armature fixe 4 est séparée du milieu extérieur ex par deux compartiments :
- un premier compartiment 42 limité par le contact 43 entre la lèvre 38 et le support tournant 3 d'une part et le contact 44 entre la lèvre 39 et la surface 23 de la portée 8 d'autre part ;
- un deuxième compartiment 45 limité par le contact 44 défini ci-dessus d'une part et le contact 46 entre la lèvre 39 et la surface 24 de la paroi 12 d'autre part.

Ces deux compartiments garnis de graisse peuvent jouer le rôle de sas limitant la pénétration de polluants vers l'intérieur du roulement.

Le joint d'étanchéité 33 peut être plein ou non et est élaboré en élastomère tel que VITON, acrylonitrile ou tout autre matériau équivalent, choisi en fonction des applications.

La magnétisation du codeur 6 va maintenant être détaillée.

Ainsi qu'il apparaît en figure 1 ou 2, l'ensemble préassemblé 1 formant joint d'étanchéité à codeur incorporé, destiné à être monté entre un support fixe 2 et un support tournant 3 faisant partie d'un roulement ou d'un palier est dépourvu de moyens de montage direct d'un capteur en regard du codeur. Ceci afin de ne pas concevoir autant de géométries de moyens de fixation des capteurs que de géométries de roulements associés.

Par ailleurs, dans le montage selon l'invention, il n'est pas nécessaire que le capteur soit placé au contact de la face latérale extérieure 10 de l'armature fixe 4.

Ceci afin d'éviter tout choc ou toute contrainte mécanique sur le capteur liée aux dilatation thermiques ou aux vibrations et déplacements mécaniques parasites, notamment les déplacements parasites latéraux du roulement dans son logement.

Pour toutes ces raisons, le capteur n'est pas représenté sur les figures car sa position n'est pas figée.

Les matériaux de l'armature fixe de protection 4 sont choisis amagnétiques afin de permettre une lecture des impulsions émises par le codeur 6, au travers de l'armature fixe 4.

La dissociation mécanique du capteur par rapport à l'ensemble préassemblé 1, et l'absence de contact entre ce capteur et l'armature fixe 4 de protection au travers de laquelle est détecté le flux magnétique du codeur 6, permettent certes une bonne protection du capteur et permet de concevoir indépendamment les ensembles 1 et les capteurs.

Mais, l'homme du métier perd alors, a priori, la maîtrise de la valeur d'entrefer.

L'homme du métier sait en effet que l'induction décroît fortement lorsque l'entrefer augmente et qu'une valeur seuil de densité de flux magnétique conditionne la commutation d'un capteur de Hall ou magnétorésistance pour un entrefer d'une valeur maximum déterminée.

L'invention permet de résoudre ce problème technique, tout en maintenant une bonne résolution pour le signal délivré par le capteur activé par le codeur, et en assurant en combinaison :
- la mise en place d'un capteur de type magnétorésistance ou sonde à effet Hall à une grande valeur d'entrefer ;
- la conception dissociée du capteur et de l'ensemble préassemblé 1, aucun moyen d'association mécanique directe du capteur en regard de l'ensemble 1 n'étant nécessaire ;
- la lecture au travers d'une armature fixe des impulsions issues du codeur, l'armature fixe assurant une protection pour le codeur 6 vis-à-vis des agressions extérieures ;
- la mise à distance possible du capteur par rapport à la face latérale extérieure de l'armature fixe de protection du codeur 6.

Les inventeurs ont constaté, après essais, que pour la géométrie de l'ensemble préassemblé 1 tel que représenté en figure1 ou 2, la diminution du nombre de paires de pôles permettait de résoudre le problème présenté ci-dessus, en conservant la combinaison des avantages listés ci-dessus.

Ce résultat est obtenu même en employant un élastomère chargé en ferrite de strontium pour le codeur, c'est-à-dire un matériau ne présentant pourtant qu'une faible valeur de densité de flux magnétique par unité de volume, par rapport à d'autres matériaux tels qu'alliages néodyme-fer-bore.

Réduire le nombre de paires de pôles est peu naturel pour l'homme du métier qui sait bien que le niveau de résolution du codeur est d'autant plus faible que le nombre de paires de pôles est faible.

Or, la résolution est le plus souvent imposée par les applications, par exemple celles liées à l'automobile. A titre d'exemple, les applications ABS donnent lieu à une résolution conventionnellement égale à 48 impulsions par tour.

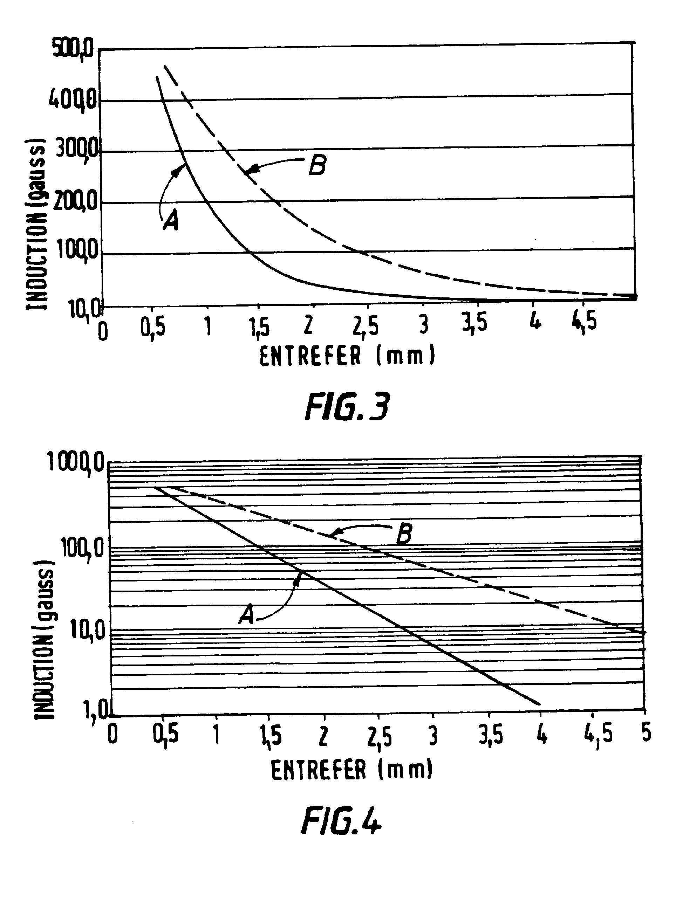

Les variations d'inductions observées, en fonction de l'entrefer, sont illustrées à titre d'exemple indicatif en figures 3 et 4, pour une géométrie du type représenté en figure 2.

La courbe A en traits pleins correspond à une géométrie du type représenté en figure 2, pour 48 paires de pôles, nombre nécessaire pour permettre à un capteur à un seul élément sensible de délivrer 48 impulsions par tour.

La courbe B en tiretés sur les figures 3 et 4 correspond à une géométrie d'ensemble préassemblé 1 identique à celle associée à la courbe A, seul le nombre de paires de pôles du codeur 6 étant modifié à une valeur de 24, donnant lieu à 24 impulsions par tour.

Ainsi qu'il apparaît en figures 3 et 4, la valeur de l'entrefer, pour une valeur donnée d'induction, varie fortement lorsque le nombre de paires de pôles varie.

Ainsi, pour une valeur d'induction de 10G par exemple exigée pour la commutation de capteurs de Hall, l'entrefer varie de 2,7 à 4,8 mm environ.

L'on décrit maintenant le traitement du signal issu du codeur, et reçu par un capteur de type magnétorésistance ou capteur Hall.

La division du nombre de paires de pôles par 2, par rapport à une géométrie conventionnelle, pour aboutir à 24 voire 12 paires de pôles implique un traitement du signal afin de maintenir une qualité de signal identique délivré par le capteur activé par le codeur 6.

Pour ce faire, un circuit électronique peut être associé au capteur, ce dernier incorporant non plus un seul, mais deux éléments sensibles.

Dans le cas où la distance entre les éléments sensibles est adaptée au codeur multipolaire, c'est-à-dire dans le cas où les éléments sensibles sont écartés d'un demi pas polaire de codeur, un dispositif simple utilisant deux triggers ainsi qu'une fonction XOR (OU exclusif) permet de doubler la résolution du codeur multipolaire.

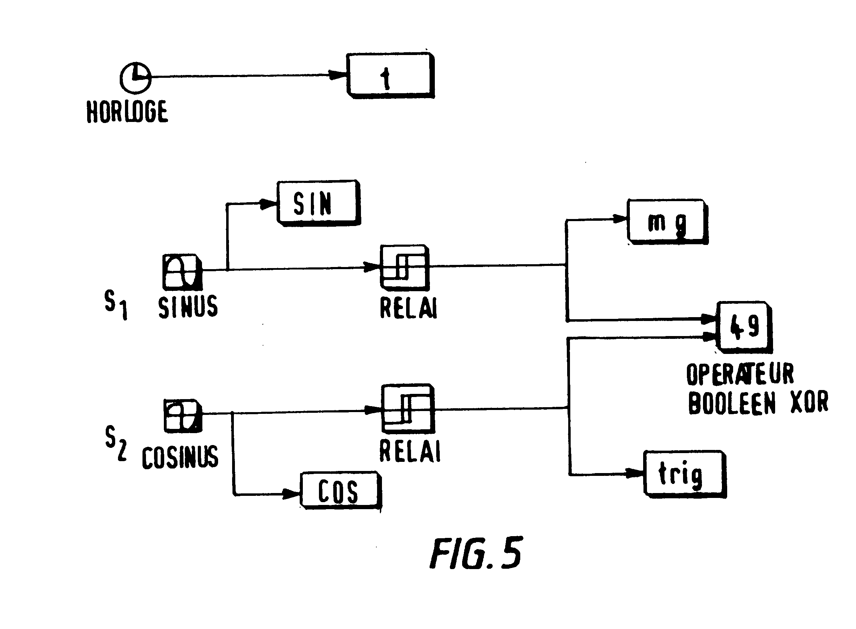

Le synoptique du traitement est donné en figure 5.

Les signaux S₁, S₂ issus des éléments sensiblement sont en sinus et cosinus.

Chacun de ces signaux est déclenché autour du 0 en passant par exemple dans un circuit de déclenchement dans lequel l'amplitude du signal de sortie présente une variation d'amplitude brusque et importante pour une faible augmentation du signal d'entrée à partir d'une valeur nulle.

Les signaux digitaux ainsi obtenus sont déphasés de 90° électrique et ont une résolution égale à la résolution du codeur multipolaire.

Une fonction booleenne 49 XOR (OU exclusif), permet de multiplier par 2 la résolution du signal de sortie.

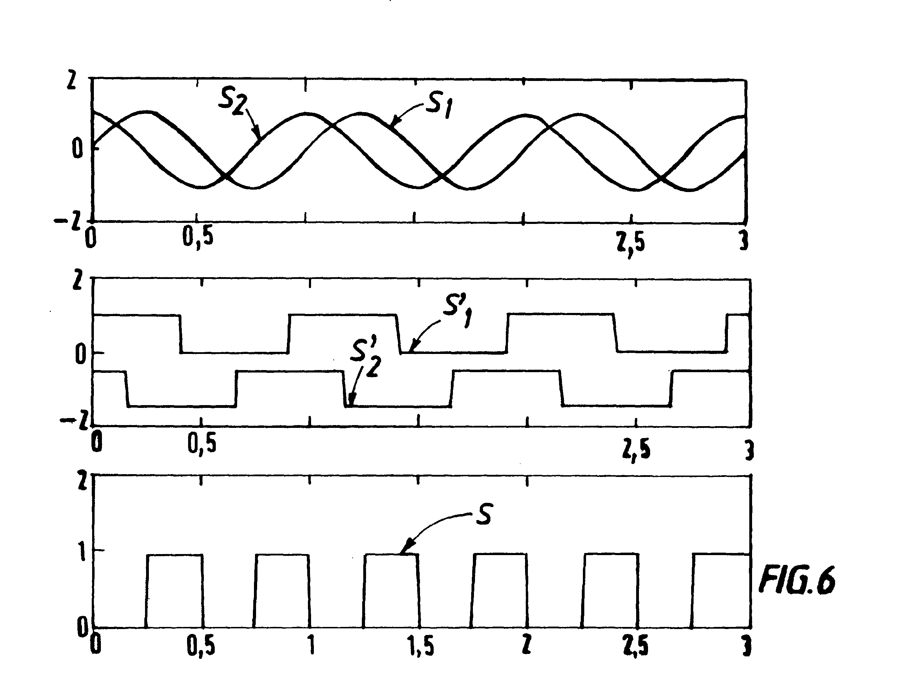

La figure 6 présente schématiquement les signaux analogiques S₁, S₂ issus du capteur et les signaux digitaux S₁', S₂' ainsi que le signal final S après passage dans la fonction XOR 49. Ainsi, un codeur à 24 paires de pôles utilisé en association avec un tel capteur et un tel circuit de traitement permet d'obtenir 48 impulsions par tour.

Dans le cas où la distance inter-élément sensible n'est pas adaptée à la longueur polaire, c'est-à-dire dans le cas où les éléments sensibles ne sont pas écartés d'un demi pas polaire, mais d'une valeur différente, les signaux issus des deux éléments sensibles ne sont plus déphasés de 90° électriques.

En fonction de la longueur polaire du codeur utilisé, le déphasage est soit supérieur soit inférieur à 90°, ce qui influe sur le rapport cyclique du signal de sortie.

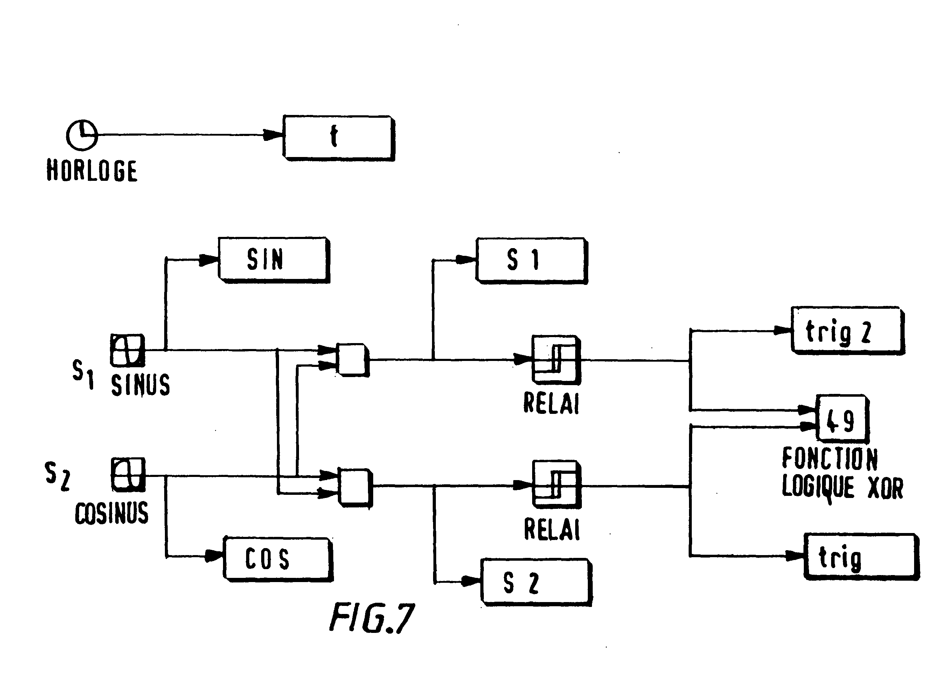

Pour annuler cet effet, un circuit de mise en quadrature des signaux tel que représenté en figure 7 peut être employé.

Les deux signaux d'entrée S₁, S₂ sont remplacés par leur somme et leur différence.

Les signaux obtenus étant en quadrature, le même traitement que celui présenté auparavant dans le cas où les éléments sensibles sont déphasés d'un demi pas polaire peut être effectué.

L'emploi de cette technique de multiplication de résolution du codeur permet d'utiliser un seul et même capteur pour l'ensemble des codeurs quelle que soit la largeur polaire.

## Revendications

1. Ensemble préassemblé (1) formant joint d'étanchéité à codeur (6) magnétique multipolaire incorporé, destiné à être monté entre un support fixe (2) et un support tournant (3) faisant partie d'un roulement ou d'un palier, ledit ensemble comprenant :
- une armature fixe (4) solidarisée au support fixe (2) ;
- une armature mobile (5) solidarisée au support tournant (3),
- un codeur magnétique multipolaire (6) porté par l'armature mobile (5) et comportant un nombre de paires de pôles suffisamment faible pour permettre la mise à distance de la face latérale externe (10) de l'armature fixe (4) par rapport au capteur destiné à détecter le flux magnétique du codeur (6) au travers de l'armature fixe,
**caractérisé en ce qu'**il comprend un joint d'étanchéité solidaire de l'armature fixe (4).

2. Ensemble préassemblé selon la revendication 1, **caractérisé en ce que** le joint d'étanchéité comprend au moins un moyen d'étanchéité dynamique tel qu'une lèvre en frottement contre le support tournant, ledit joint étant dépourvu de talon d'étanchéité statique.

3. Ensemble préassemblé selon la revendication 1, **caractérisé en ce que** le joint d'étanchéité (33) recouvre la face latérale externe (34) d'une paroi support d'étanchéité (31) de l'armature fixe (4), le joint d'étanchéité comprenant :
- un talon d'étanchéité statique (36) en contact contre la paroi latérale externe supérieure du support fixe (2) ;
- au moins un moyen d'étanchéité dynamique (38,39) en frottement contre le support tournant (3).

4. Ensemble préassemblé selon l'une quelconque des revendications 1 à 3, **caractérisé en ce que** l'armature mobile (5) comprend une première paroi (12) et une troisième paroi (14) décalée axialement vers l'extérieur par rapport à la première paroi (12), la première paroi étant reliée par un congé de raccordement à une première portée cylindrique (7) de l'armature mobile (5) sur le support mobile (3), la troisième paroi portant le codeur magnétique.

5. Ensemble préassemblé selon la revendication 4, **caractérisé en ce que** l'armature mobile (5) comporte une pièce basale (11) pourvue d'un décrochement (21) formant une quatrième paroi annulaire radiale, décalée vers l'extérieur, enrobée dans le matériau constituant le codeur magnétique (6).

6. Ensemble préassemblé selon l'une quelconque des revendications 1 à 5, **caractérisé en ce que** la première paroi annulaire (12) et une deuxième paroi annulaire (13) de l'armature mobile (5) forment une gorge annulaire (22) à ouverture tournée vers l'extérieur.

7. Ensemble préassemblé selon la revendication 6, **caractérisé en ce que** la gorge annulaire (22) présente, en section axiale, un profil en U ou pseudo U, en V ou pseudo V.

8. Ensemble préassemblé selon la revendication 7, **caractérisé en ce que** la face latérale externe de la gorge comprend des surfaces d'appui (23,24) pour au moins une lèvre d'étanchéité dynamique (38,39).

9. Ensemble préassemblé selon l'une quelconque des revendications 1 à 8, **caractérisé en ce que** le disque codeur est élaboré en élastomère chargé de ferrite de strontium ou de ferrite de baryum.

10. Ensemble préassemblé selon l'une quelconque des revendications 1 à 9, **caractérisé en ce que** le joint d'étanchéité (33) comporte, en partant du support fixe (2) et en allant vers le support tournant (3) :
- un talon d'étanchéité statique (36) ;
- une bande annulaire (37) ;
- au moins une lèvre d'étanchéité dynamique (38,39).

11. Ensemble préassemblé selon la revendication 10, **caractérisé en ce qu'**une lèvre d'étanchéité dynamique (38) vient en appui contre la face latérale externe (40) du support tournant (3).

12. Roulement ou palier étanche comportant une bague ou support fixe et une bague ou support tournant et, monté sur eux, un ensemble préassemblé formant joint d'étanchéité, selon l'une quelconque des revendications 1 à 11.

13. Roulement ou palier selon la revendication 12, **caractérisé en ce que** la surface latérale externe de l'armature fixe est décalée vers l'intérieur par rapport au plan P tangent aux faces latérales externes des bagues ou support de palier.

14. Roulement ou palier selon la revendication 12, **caractérisé en ce que** la surface latérale externe de l'armature fixe est sensiblement contenue dans le plan P tangent aux faces latérales externes des bagues ou supports de palier.

15. Roulement selon l'une quelconque des revendications 12 à 14, associé à un capteur de type magnétorésistance ou sonde de Hall, **caractérisé en ce que** le nombre de paires de pôles étant fixé à une valeur N la plus faible possible pour un entrefer donné, un circuit électronique couplé au capteur maintient une qualité de signal identique à celle qui aurait été obtenue avec un codeur comprenant nombre de paires de pôles valant 2N.

## Claims

1. Pre-mounted assembly (1) forming a seal with an incorporated multi-pole magnetic encoder (6) designed to be mounted between a fixed support (2) and a rotating support (3) forming part of a rolling bearing or of a journal bearing, the said assembly comprising:
- a fixed armature (4) secured to the fixed support (2);
- a movable armature (5) secured to the rotating support (3),
- a multi-pole magnetic encoder (6) supported by the movable armature (5) and comprising a number of pairs of poles that is sufficiently low to allow the distancing of the outer lateral face (10) with the fixed armature (4) relative to the sensor designed to detect the magnetic flux of the encoder (6) through the fixed armature,
**characterized in that** it comprises a seal secured to the fixed armature (4).

2. Pre-mounted assembly according to Claim 1, **characterized in that** the seal comprises at least one dynamic sealing means such as a lip in friction against the rotating support, the said seal having no static sealing bead.

3. Pre-mounted assembly according to Claim 1, **characterized in that** the seal (33) covers the outer lateral face (34) of a sealing supporting wall (31) of the fixed armature (4), the seal comprising:
- a static sealing bead (36) in contact against the upper outer lateral wall of the fixed support (2);
- at least one dynamic sealing means (38, 39) in friction against the rotating support (3).

4. Pre-mounted assembly according to any one of Claims 1 to 3, **characterized in that** the movable armature (5) comprises a first wall (12) and a third wall (14) offset axially toward the outside relative to the first wall (12), the first wall being connected by a fillet to a first cylindrical bearing surface (7) of the movable armature (5) on the movable support (3), the third wall supporting the magnetic encoder.

5. Pre-mounted assembly according to Claim 4, **characterized in that** the movable armature (5) comprises a basal part (11) provided with a recess (21) forming a fourth radial annular wall, offset towards the outside, coated in the material forming the magnetic encoder (6).

6. Pre-mounted assembly according to any one of Claims 1 to 5, **characterized in that** the first annular wall (12) and a second annular wall (13) of the movable armature (5) form an annular groove (22) with an opening turned towards the outside.

7. Pre-mounted assembly according to Claim 6, **characterized in that** the annular groove (22) has, in axial section, a U-shaped or pseudo-U-shaped, V-shaped or pseudo-V-shaped profile.

8. Pre-mounted assembly according to Claim 7, **characterized in** the outer lateral face of the groove comprises bearing surfaces (23, 24) for at least one dynamic sealing lip (38, 39).

9. Pre-mounted assembly according to any one of Claims 1 to 8, **characterized in that** the encoder disc is made of elastomer laden with strontium ferrite or with barium ferrite.

10. Pre-mounted assembly according to any one of Claims 1 to 9, **characterized in that** the seal (33) comprises, starting from the fixed support (2) and going towards the rotating support (3):
- a static sealing bead (36);
- an annular strip (37);
- at least one dynamic sealing lip (38, 39)

11. Pre-mounted assembly according to Claim 10, **characterized in that** a dynamic sealing lip (38) rests against the outer lateral face (40) of the rotating support (3).

12. Rolling bearing or journal bearing seal comprising a fixed brace or support and a rotating brace or support and, mounted on them, a pre-mounted assembly forming a seal, according to any one of Claims 1 to 11.

13. Rolling bearing or journal bearing according to Claim 12, **characterized in that** the outer lateral surface of the fixed armature is offset towards the inside relative to the plane P that is tangential to the outer lateral faces of the bearing braces or supports.

14. Rolling bearing or journal bearing according to Claim 12, **characterized in that** the outer lateral surface of the fixed armature is substantially contained in the plane P tangential to the outer lateral faces of the bearing braces or supports.

15. Rolling bearing according to any one of Claims 12 to 14, associated with a sensor of the magnetoresistance type or Hall probe, **characterized in that** the number of pairs of poles being fixed at a value N that is the lowest possible for a given air gap, an electronic circuit coupled to the sensor maintains a signal quality that is identical to that which would have been obtained with an encoder comprising a number of pairs of poles equal to 2N.

## Patentansprüche

1. Vorgefertigte Einheit (1), die eine Dichtung mit eingebettetem mehrpoligem magnetischem Geberelement (6) bildet und dazu bestimmt ist, zwischen einem festen Träger (2) und einem drehbaren Träger (3) montiert zu werden, die Teil eines Wälzlagers oder eines Wellenlagers sind, wobei die Einheit Folgendes umfasst:
- eine feste Armatur (4), der mit dem festen Träger (2) verbunden ist;
- eine bewegliche Armatur (5), der mit dem drehbaren Träger (3) verbunden ist,
- ein magnetisches multipolares Geberelement (6), das von der beweglichen Armatur (5) getragen wird und eine ausreichend geringe Anzahl von Polpaaren umfasst, um die Entfernung der äußeren Seitenfläche (10) der festen Armatur (4) in Bezug zum Sensor zu ermöglichen, der dazu bestimmt ist, den Magnetstrom des Geberelements (6) durch die feste Armatur zu erfassen,
**dadurch gekennzeichnet, dass** sie eine Dichtung umfasst, die mit der festen Armatur (4) verbunden ist.

2. Vorgefertigte Einheit nach Anspruch 1, **dadurch gekennzeichnet, dass** die Dichtung mindestens ein dynamisches Dichtungsmittel, wie eine Lippe, die am drehbaren Träger mit Reibung angeordnet ist, umfasst, wobei die Dichtung keinen statischen Dichtungsabschnitt umfasst.

3. Vorgefertigte Einheit nach Anspruch 1, **dadurch gekennzeichnet, dass** die Dichtung (33) die äußere Seitenfläche (34) einer Dichtungsstützwand (31) der festen Armatur (4) bedeckt, wobei die Dichtung folgendes umfasst:
- einen statischen Dichtungsabschnitt (36), der mit der äußeren oberen Seitenwand des festen Trägers (2) in Kontakt ist;
- mindestens ein dynamisches Dichtungsmittel (38, 39), das am drehbaren Träger (3) mit Reibung angeordnet ist.

4. Vorgefertigte Einheit nach einem der Ansprüche 1 bis 3, **dadurch gekennzeichnet, dass** die bewegliche Armatur (5) eine erste Wand (12) und eine dritte Wand (14) umfasst, die axial nach außen in Bezug zur ersten Wand (12) versetzt ist, wobei die erste Wand durch eine Anschlusskehle mit einem ersten zylindrischen Abschnitt (7) der beweglichen Armatur (5) auf dem beweglichen Träger (3) verbunden ist, wobei die dritte Wand das magnetische Geberelement trägt.

5. Vorgefertigte Einheit nach Anspruch 4, **dadurch gekennzeichnet, dass** die bewegliche Armatur (5) einen Basisteil (11) umfasst, der mit einer Abweichung (21) versehen ist, der eine vierte radiale ringförmige Wand bildet, die nach außen versetzt und mit dem Material, das das magnetische Geberelement (6) darstellt, umgeben ist.

6. Vorgefertigte Einheit nach einem der Ansprüche 1 bis 5, **dadurch gekennzeichnet, dass** die erste ringförmige Wand (12) und eine zweite ringförmige Wand (13) der beweglichen Armatur (5) eine Ringnut (22) bilden, deren Öffnung nach außen gerichtet ist.

7. Vorgefertigte Einheit nach Anspruch 6, **dadurch gekennzeichnet, dass** die Ringnut (22) im Axialschnitt ein U-Profil oder Pseudo-U-Profil oder ein V-Profil oder Pseudo-V-Profil aufweist.

8. Vorgefertigte Einheit nach Anspruch 7, **dadurch gekennzeichnet, dass** die äußere Seitenfläche der Nut Stützflächen (23, 24) für mindestens eine dynamische Dichtungslippe (38, 39) umfasst.

9. Vorgefertigte Einheit nach einem der Ansprüche 1 bis 8, **dadurch gekennzeichnet, dass** die Geberscheibe aus Elastomer hergestellt ist, das mit Strontiumferrit oder Baryumferrit beaufschlagt ist.

10. Vorgefertigte Einheit nach einem der Ansprüche 1 bis 9, **dadurch gekennzeichnet, dass** die Dichtung (33) ausgehend vom festen Träger (2) und zum drehbaren Träger (3) hin Folgendes umfasst:
- einen statischen Dichtungsabschnitt (36);
- ein ringförmiges Band (37);
- mindestens eine dynamische Dichtungslippe (38, 39).

11. Vorgefertigte Einheit nach Anspruch 10, **dadurch gekennzeichnet, dass** eine dynamische Dichtungslippe (38) an der äußeren Seitenfläche (40) des drehbaren Trägers (3) zur Anlage gelangt.

12. Dichtes Wälzlager oder Wellenlager, umfassend einen festen Ring oder Träger und einen drehbaren Ring oder Träger und auf diesen montiert eine vorgefertigte Einheit, die eine Dichtung bildet, nach einem der Ansprüche 1 bis 11.

13. Wälzlager oder Wellenlager nach Anspruch 12, **dadurch gekennzeichnet, dass** die äußere Seitenfläche der festen Armatur nach innen in Bezug zur Ebene P, die die äußeren Seitenflächen der Ringe oder Träger des Lagers tangiert, versetzt ist.

14. Wälzlager oder Wellenlager nach Anspruch 12, **dadurch gekennzeichnet, dass** die äußere Seitenfläche der festen Armatur im Wesentlichen in der Ebene P enthalten ist, die die äußeren Seitenflächen der Ringe oder Träger des Lagers tangiert.

15. Wälzlager nach einem der Ansprüche 12 bis 14, verbunden mit einem Sensor des Typs Magnetwiderstand oder Hallsonde, **dadurch gekennzeichnet, dass** die Anzahl von Polpaaren auf einem Wert N festgesetzt ist, der der kleinstmögliche für einen gegebenen Luftspalt ist, wobei eine mit dem Sensor gekoppelte Elektronikschaltung eine Signalqualität identisch mit jener, die mit einem Geberelement mit einer Anzahl von Polpaaren gleich 2N erzielt worden wäre.
